# EUROPÄISCHE PATENTANMELDUNG

(11) **EP 3 831 559 A1**
(43) Veröffentlichungstag der Anmeldung: **09.06.2021**
(21) Anmeldenummer: 20205469.8
(22) Anmeldetag: 03.11.2020
(51) Int. Cl.: B26D 7/06, B26D 7/30, A22C 17/00

(54) **VERFAHREN ZUM VERPRESSEN UND GGFS. AUFSCHNEIDEN EINES LAIBES SOWIE HIERFÜR GEEIGNETE AUFSCHNEIDEMASCHINE**

(30) Priorität: 04.12.2019 DE 102019133068
(71) Anmelder: TVI Entwicklung und Produktion GmbH, 83052 Bruckmühl (DE)
(72) Erfinder: Mayr, Martin, 83549 Eiselfing (DE)
(74) Vertreter: Weickmann & Weickmann PartmbB

(57) **Zusammenfassung**

Um beim Verpressen eines Laibes (100) dessen Struktur möglichst wenig zu schädigen, soll die beim Verpressen auftretende Längenveränderung (**ΔL**) des Laibes auf eine vorgegebene Soll-Längenveränderung (**ΔL**soll) begrenzt werden.

Hierfür wird aus vor dem Verpressen ermittelten Basis-Daten des Laibes (100), insbesondere dessen Länge (L) sowie Volumens (V) oder Gewichtes (G), eine für das Verpressen einzustellende Quer-Position des Quer-Pressstempels (5) automatisch ermittelt und eingestellt.

Eine Soll-Querschnitts-Beeinflussung, die notwendig ist zur Verformung in einen Strang (100) wird aus der vorgegebenen Soll-Längeveränderung ( **ΔL** soll) und aus den ermittelten physikalischen Bais-Daten des Laibes (100) automatisch ermittelt.

## Beschreibung

### I. Anwendungsgebiet

Die Erfindung betrifft das Verpressen und nachfolgende Aufschneiden eines anfangs unregelmäßig geformten Laibes aus insbesondere elastischem Material wie etwa einem gewachsenen Fleischstück in - insbesondere gewichtsgenaue - Scheiben.

### II. Technischer Hintergrund

Die Herstellung von gewichtsgenauen Scheiben oder Portionen aus einem elastischen Strang ist relativ problemlos möglich, wenn dieser Strang über seine Länge überall den gleichen Querschnitt besitzt und aus einem homogenen, überall gleich einfach zu durchtrennenden, Material besteht, wie etwa ein industriell hergestellter Wurst-Strang oder Käse-Strang.

Hierfür sind so genannte Slicer bekannt, die meist mit einem runden oder sichelförmigen, rotierenden Messer, dessen Schneide sich entlang der Außenkante erstreckt, Scheiben abschneiden, während der dabei meist freiliegende Strang entweder nur dazwischen oder kontinuierlich vorwärts gefahren wird.

Ein gewachsenes Fleischstück hat diese Eigenschaften jedoch nicht, denn jeder dieser Laibe besitzt eine andere Gestaltung und darüber hinaus einen sich über die Länge ändernden Querschnitt und kann auch aus Materialien unterschiedlicher Konsistenz, Härte und Elastizität bestehen, beispielsweise aus den Fettanteilen, dem reinen Muskelfleisch, der umgebenden Silberhaut und gegebenenfalls auch noch Knochen wie bei einem Kotelett-Stück.

In diesem Zusammenhang ist es bereits bekannt, einen solchen Laib zunächst so zu verformen, dass dieser einen definierten, bekannten Querschnitt besitzt, zumindest an dem Ende, an dem die nächste Scheibe abgeschnitten wird, vorzugsweise über die gesamte Länge den gleichen Querschnitt, also einem Strang.

Dann kann eine Relation zwischen der einstellbaren Dicke der Scheibe und dem Gewicht der Scheibe mittels des bekannten Querschnitt des sowie des abschätzbaren spezifischen Gewichts hergestellt werden, wenn auch nicht exakt, da sich von einer Scheibe zur nächsten die Zusammensetzung des Laibes ändern kann, und dessen Komponenten unterschiedliche spezifische Gewichte aufweisen können.

Um diese Verformung zu einem Strang zu erreichen, wird der - in der Regel leicht angefrorene - Laib zunächst in ein Formrohr eingebracht, welches über seine Längserstreckung einen gleich bleibenden freien inneren Querschnitt besitzt. Anschließend wird der Laib im Formrohr zumindest in axialer Richtung des Formrohres mittels eines Längs-Pressstempels gegen einen Anschlag gepresst, sodass sich der Laib in seinem Querschnitt so aufweitet, dass er den gesamten inneren Freiraum des Formrohres, der über die gesamte Länge den gleichen Querschnitt besitzt, ausfüllt und somit über die gesamte Länge dessen Querschnitt annimmt.

Dabei können Formrohre unterschiedlichen Querschnittes benutzt werden, je nach Abmessungen des Laibes, und der Querschnitt des Formrohres kann nach Einlegen des Laibes zusätzlich verändert werden, beispielsweise indem zwei einander gegenüberliegende Abschnitte der Umfangswand des Formrohres aufeinander zu bewegt werden, so dass einer der Abschnitte dann als Quer-Pressstempel wirken kann und damit auch eine Querverpressung des Laibes bewirkt wird.

Wird ein Laib ausschließlich in Längsrichtung verpresst, so kann es gerade bei Laiben mit über die Länge stark variierendem Querschnitt zu einem Faltenwurf des schmalen Endes kommen und/oder die Struktur des Materials des Laibes dabei negativ verändert werden, insbesondere können nicht gewünschte Risse in der Struktur bewirkt werden.

Deshalb ist die Kombination von Längsverpressung und Querverpressung als schonender bekannt, insbesondere wenn das Querverpressen in zwei unterschiedlichen Querrichtungen durchgeführt wird.

Allerdings ist auch bekannt, dass es abhängig von der Abfolge und dem Maß von Längsverpressung und Querverpressung relativ zueinander zu weiteren Problemen kommen kann, beispielsweise zu starkem Anhaften des Laibes an den Umfangswänden, wenn das Längsverpressen in einem bereits querverpressten Zustand durchgeführt wird oder ungenügende Durchleitung der Längs-Presskraft vom Längs-Pressstempel am hinteren Ende zum vorderen Ende des zu verpressenden Laibes.

### III. Darstellung der Erfindung

### a) Technische Aufgabe

Es ist daher die Aufgabe der vorliegenden Erfindung, dass Verpressen für das zu verpressende Material des Laibes möglichst schonend durchzuführen bei sowohl einem Längsverpressen, also in Richtung der größten Erstreckung des Laibes, als auch einem Querverpressen, insbesondere wenn anschließend ein Aufschneiden des zu einem Strang verpressten Laibes durchgeführt wird.

Es ist ferner die Aufgabe, eine hierfür geeignete Aufschneide-Maschine zur Verfügung zu stellen.

### b) Lösung der Aufgabe

Diese Aufgabe wird durch die Merkmale der Ansprüche 1, 10 und 11 gelöst. Vorteilhafte Ausführungsformen ergeben sich aus den Unteransprüchen.

Hinsichtlich des Verfahrens wird diese Aufgabe dadurch gelöst, dass für die Längenveränderung des Laibes beim Verpressen ein Soll-Bereich vorgegeben wird, die Soll-Längenveränderung, die beim Verpressen nicht überschritten werden soll.

Abhängig von der Soll-Längenveränderung wird, meist automatisch, festgelegt oder von einem Bediener ermittelt, wie stark die Beeinflussung des in Querrichtung liegenden Querschnittes des Laibes sein soll oder muss, um aus dem Laib einen Strang mit über die Länge gleichbleibendem Querschnitt zu erzeugen.

Zu diesem Zweck werden vor dem Verpressen des Laibes zumindest einige physikalische Basis-Daten dieses Laibes von einer hierfür verwendeten Maschine, insbesondere einer Aufschneide-Maschine, automatisch ermittelt oder vom Bediener über eine Eingabe-Einheit eingegeben, die zumindest teilweise dazu dienen, abhängig davon diese Soll-Längenveränderung festzulegen.

Die physikalischen Basisdaten, die hierfür von dem Laib ermittelt werden, sind zumindest die Länge des Laibes in Längspress-Richtung, also wenn der Laib mit seiner größten Erstreckung in Längspress-Richtung angeordnet ist, sowie das Gewicht oder ersatzweise das Volumen des Laibes, die ineinander umgerechnet werden können mit Hilfe des in der Regel bekannten spezifischen Gewichtes des Materials des Laibes.

Die Länge des Laibes im unverpressten Zustand sollte bereits deshalb ermittelt werden, um die Länge des Laibes mit dem zu einem Strang mit einem über die Länge gleich bleibenden Querschnitt verpressten Zustand vergleichen zu können und damit die Ist-Längenveränderung ermitteln zu können und deren Übereinstimmung mit der gewünschten Soll-Längenveränderung.

Vorzugsweise wird auch der im unverpressten Ausgangszustand größte Querschnitt des Laibes ermittelt, denn im Vergleich zu seiner Länge und seinem Volumen kann dann der Schlankheits-Grad (definieren) bestimmt werden, der ebenfalls ein wichtiger Parameter dafür ist, wie stark die Soll-Längenveränderung sein darf, ohne dass beispielsweise ein Faltenwurf des schmalen Endes des Laibes eintritt.

Weitere physikalische Basis-Daten können Material-Daten sein, beispielsweise die Elastizität und/oder die Plastizität und/oder der Flüssigkeitsanteil des Materials, und/oder Zustands-Daten des Materials wie etwa dessen Frostungs-Zustand, beispielsweise beschrieben in Form der Oberflächentemperatur und der Frostungstiefe, also etwa der Temperaturabnahme in Tiefen-Richtung oder der Temperatur gemessen in einer definierten Tiefe von der Oberfläche aus.

Denn die zu verpressenden Laibe werden in der Regel vorher leicht angefrostet, sind also in ihren äußeren Randbereichen gefroren, im Kern dagegen nicht, um einerseits ein sofort anschließendes Aufschneiden zu erleichtern und andererseits die Anhaftung des Laibes beim Verpressen an daran anliegenden Bauteilen, beispielsweise den Umfangsflächen eines nachfolgend beschriebenen Formrohres.

Darüber hinaus können auch nicht-physikalische Basis-Daten erhoben werden, die allerdings primär vom Bediener über eine Eingabeeinheit die Steuerung eingegeben werden, beispielsweise die grundsätzliche Art des Materials des Laibes, also beispielsweise Fisch, Fleisch oder ein anderes Lebensmittel, und bei einem gewachsenem Fleischstück insbesondere natürlich die Tierart sowie die Herkunfts-Stelle des Fleischstückes am Tier.

Dabei wird das Verpressen in Längsrichtung und auch die Beeinflussung des Querschnitts des Laibes in Querrichtung, also hinsichtlich seines Querschnittes, in aller Regel mittels eines an beiden Stirnseiten offenen Formrohres durchgeführt, welches über seine Längserstreckung, die Längsrichtung, einen gleich bleibenden Querschnitt besitzt.

Dabei wird das Längsverpressen mittels eines Längs-Pressstempels durchgeführt, der in das Formrohr eingeführt und in diesem verfahren werden kann und mit einer gewünschten Presskraft beaufschlagt werden kann.

Der gleichbleibende Querschnitt des Formrohres ist variabel, indem ein Quer-Pressstempel, der ebenfalls mit einer Presskraft beaufschlagt werden kann und einen Teil der Umfangswand bildet, in eine im Querschnitt etwa U-förmige Formrohr-Rinne mehr oder weniger weit eingefahren werden kann.

Dadurch ist ein Querverpressen zumindest in einer der Querrichtungen zur Längsrichtung möglich, indem der ursprüngliche maximale Querschnitt des beispielsweise etwa birnenförmigen Laibes reduziert wird, wodurch sich natürlich - wenn nicht gleichzeitig ein Längsverpressen erfolgt - dessen Länge vergrößern würde.

Einer der Pressstempel kann jedoch auch lediglich als Anschlag für den zu verpressenden Laib dienen, wodurch jedoch ebenfalls eine Beeinflussung der Abmessungen des Laibes in dieser Richtung bewirkt wird:
So kann beispielsweise bei einem sehr langen und schlanken Laib, dessen Querschnitts-Unterschiede entlang seiner Länge relativ gering sind, der Längs-Pressstempel auf eine Position beabstandet zu einem Ende des unverpressten Laibes im Formrohr eingestellt werden.

Beim anschließenden Querverpressen vergrößert sich dann die Länge dieses schlanken Laibes und dieser wird mit einer Stirnfläche gegen den positionierten Längs-Pressstempel angepresst werden, wiederum mit dem Ziel, aus dem unregelmäßigen Laib einen Strang mit über die Länge gleichbleibendem Querschnitt herzustellen.

Unabhängig davon, ob in einer der Richtungen die Dimension des Laibes reduziert wird oder sogar erhöht wird, wird von diesem Vorgang für die Zwecke der vorliegenden Anmeldung als von einem Verpressen gesprochen.

Während der Längs-Pressstempel meist kraftgesteuert ist, ist der Quer-Pressstempel häufig positionsgesteuert.

Um die Komplexität des Längs-Pressstempels zu reduzieren, werden dabei vorzugsweise maximal 10, besser maximal nur 5, besser maximal nur 3 Quer-Positionen für den Quer-Pressstempel zur Auswahl zur Verfügung gestellt.

Um die Struktur des Laibes zu schonen, wird die Soll-Längenveränderung meist in einem Bereich zwischen -30% und +10%, ausgehend von der unverpressten Länge, vorgegeben, da es sich gezeigt hat, dass in diesem Bereich eine Längenveränderung noch keinen zu starken negativen Einfluss auf die Struktur des Laibes hat.

Die Soll-Längenveränderung kann also durchaus auch einen positiven Wert besitzen, beispielsweise wenn es sich um einen im Vergleich zu seinem Querschnitt sehr langen Laib handelt, dessen unverpresste Länge mindestens das 5-fache, besser mindestens das 10-fache der größten Dicke im unverpressten Zustand beträgt.

Die Veränderung in Längsrichtung und Querrichtung, also hinsichtlich Länge und maximalem Durchmesser, ist also in einer Dimension ein negativer und in der anderen ein positiver Wert, oder in beiden Dimensionen ein negativer Wert.

Vorzugsweise ist der verpresste Zustand gleichzeitig ein sogenannter Mess-Zustand, in dem über die Position des Längs-Pressstempels die Länge des zu einem Strang verpressten Laibes gemessen wird und anhand der bekannten, da ausgewählten oder gemessenen, Quer-Position des Quer-Pressstempels die Querschnittsfläche des Formrohres und hierüber das Volumen des Hohlraumes des Formrohres zwischen der - meist am vorderen Ende des Formrohres vorhandenen - Anschlagplatte und dem Längs-Pressstempel in seiner Press-Position wiedergibt.

Zum einen kann hieraus durch Vergleich mit dem vor dem Verpressen ermittelten Gewicht oder Volumen eine Abweichung bestimmt werden, die besagt, in welchem Maß der Strang den Hohlraum im Formrohr tatsächlich ausfüllt, also ob die Umformung in einen Strang mit über die gesamte Länge konstantem Querschnitt vollständig erfolgt ist. Zum anderen wird aus dieser Länge meist für ein anschließendes Aufschneiden - welches vorzugsweise ebenfalls erfolgt, während die kraftgesteuerten Stempel unter der Messkraft, wie sie beim Mess-Zustand herrscht, stehen - die Scheibendicke ermittelt.

Die zum Vorwärtsschieben des Stranges zwischen dem Abtrennen der einzelnen Scheiben am Längspressstempel anliegende Vorschub-Kraft muss jedoch keineswegs die Messkraft sein, sondern hierfür kann auch eine höhere oder niedrigere Kraft als die Messkraft ausreichend sein. Da das vorwärts schieben jedoch möglichst schnell erfolgen soll, wird hierfür in der Regel am Längspressstempel eine Kraft angelegt, die die Maximalkraft des Längspressstempels ist oder dieser zumindest sehr nahe kommt, also mindestens 80 %, besser 90 % der Maximalkraft beträgt.

In aller Regel wird nach dem beschriebenen Verpressen des Laibes dieser im verpressten Zustand und meist in der gleichen Maschine in - vorzugsweise gewichtsgenaue - Scheiben aufgeschnitten, wozu der Strang in Längspress-Richtung vorwärts geschoben wird über das vordere Schneidende des Formrohres hinaus um einen definierten Überstand, meist bis zur Anlage an einer Anschlagplatte, die in ihrem Abstand zum vorderen Endes des Formrohres, dem Schneid-Ende, eingestellt werden kann.

Dann wird mittels eines Messers, welches sich in einer Messerebene unmittelbar vor dem vorderen Schneid-Ende des Formrohres in Querrichtung bewegt, eine Scheibe abgetrennt.

Vorzugsweise ist der verpresste Zustand, für den die Soll-Längenveränderung des Laibes zutreffen soll, gleichzeitig der Aufschneide-Zustand, indem der Laib in Scheiben aufgeschnitten wird.

Die im verpressten Zustand, in dem die Soll-Längenveränderung erzielt werden soll, an den einzelnen Pressstempeln anliegenden Presskräfte liegen also auch in dem Aufschneide-Zustand vor.

Eine die Struktur besonders wenig schädigende Variante der Verpressung besteht darin, die Quer-Verpressung nicht nur in einer, sondern in zwei verschiedenen, vorzugsweise aufeinander senkrecht stehenden, Querrichtungen zur Längsrichtung durchzuführen.

Für den dann vorhandenen zweiten Quer-Pressstempel - wovon einer der beiden Quer-Pressstempel fast immer positionsgesteuert ist, um die Komplexität vor allem des Längs-Pressstempels in Grenzen zu halten - wird vorzugsweise wiederum die Quer-Position für den verpressten Zustand automatisch ermittelt wie zum 1. Quer-Pressstempel angegeben

Hinsichtlich einer zur Durchführung dieses Verfahrens geeigneten Aufschneide-Maschine umfasst eine solche Aufschneide-Maschine zunächst einmal die gattungsgemäßen Merkmale eines in Axial-Richtung verlaufenden, an beiden Enden offenen Formrohres, welches in Längs-Pressrichtung verläuft, sowie eines darin genau hineinpassenden und in diesem verschiebbaren Längs-Pressstempels, der vom hinteren Belade-Ende aus eingebracht werden und mit Presskraft beaufschlagt werden kann.

Ferner ist mindestens ein in mindestens einer der Querrichtungen wirkender Quer-Pressstempel als Teil der Umfangswandung des Formrohres vorhanden, wobei jeder der Quer-Pressstempel mit einer Presskraft beaufschlagt werden kann, wobei insbesondere die Presskräfte der einzelnen Pressstempel unabhängig voneinander gesteuert werden können.

Ferner benötigt eine solche Aufschneide-Maschine ein Messer zum Abtrennen der Scheiben vom Fleischstrang, welches vor dem vorderen Schneidende des Formrohres angeordnet ist, vorzugsweise beweglich in Querrichtung.

Die erfindungsgemäße Aufgabe wird dadurch gelöst, dass die Aufschneide-Maschine eine Basis-Daten-Messvorrichtung umfasst, die in der Lage ist, die zu messenden Basis-Daten am unverpressten Laib automatisch zu ermitteln, wie sie anhand des Verfahrens erläutert wurden.

Diese Basis-Daten-Messvorrichtung umfasst somit mindestens eine Längen-Messvorrichtung, die in der Lage ist, die Länge des Laibes im unverpressten Zustand, aber vorzugsweise auch im verpressten Zustand, zu messen. Aus der Differenz kann die Ist-Längenveränderung ermittelt werden und überprüft werden, ob diese der vorgegebenen Soll-Längenveränderung entspricht.

Ferner umfasst die Aufschneide-Maschine erfindungsgemäß eine Quer-Positioniervorrichtung, die in der Lage ist, eine vorgegebene Quer-Position mit dem Quer-Pressstempel automatisch anzufahren.

Dementsprechend benötigt eine solche Aufschneide-Maschine auch eine Steuerung, die in der Lage ist, aus ermittelten Basis-Daten des Laibes und/oder eingegebenen Basis-Daten des Laibes eine vorzugebende Quer-Position für den Quer-Pressstempel automatisch zu ermitteln und die entsprechenden Pressstempel-Antriebe anzusteuern.

Um Basis-Daten vom Bediener eingeben zu können umfasst die Aufschneide-Maschine ferner eine Eingabe-Einheit.

Vorzugsweise umfasst die Basis-Daten-Messvorrichtung
- eine Gewichts-Messvorrichtung, um das Gewicht des Laibes zu ermitteln und/oder
- eine Volumen-Messvorrichtung, um das Volumen des Laibes zu ermitteln, insbesondere eine berührungslose, vorzugsweise optische, Abtastvorrichtung, mit der nicht nur das Volumen, sondern auch die Form und damit die gesamten Abmessungen des Laibes ermittelbar sind und/oder
- eine Temperatur-Messvorrichtung, um die Temperatur des Laibes zumindest an seiner Außenfläche automatisch ermitteln zu können.

Wie oben dargelegt ermöglichen bzw. erleichtern die mit solchen Messvorrichtungen ermittelten Basis-Daten das Festlegen der Querposition des Pressstempels, um die gewünschte Soll-Längenveränderung zu erreichen.

Vorzugsweise umfasst eine erfindungsgemäße Aufschneide-Maschine auch eine dem Formrohr vorgelagerte Laib-Zufuhrvorrichtung, wie etwa ein Förderband, wobei die Basis-Daten-Messvorrichtung dann - zumindest teilweise - an dieser Laib-Zufuhr-Vorrichtung vorhanden sein kann.

So kann an der Laib-Zufuhrvorrichtung beispielsweise ein in axialer Richtung wirksamer Laib-Anschlag vorhanden sein, der deaktivierbar ist und gegen den der Laib gefahren wird, um dann mittels einer Messvorrichtung die Position seines hinteren, von dem Laib-Anschlag abgewandten Endes und darüber die Länge des Laibes im unverpressten Zustand auf einfache Art und Weise zu messen.

Für das Querverpresssen in zwei Querrichtungen besteht das Formrohr häufig aus einer U-förmigen Formrohr-Rinne, deren Seitenwände aufeinander zu bewegbar sind, sodass eine davon den einen Quer-Pressstempel bildet.

Dabei wird der Abstand der beiden Seitenwände entweder immer auf das gleiche Endmaß oder eines von wenigen Endmaßen für die Verpressung zusammengeschoben, nachdem der Laib eingelegt ist, und dann von der offenen Seite der Formrohr-Rinne her der andere Quer-Pressstempel, dessen Breite der eingestellten Breite der Öffnung der Formrohr-Rinne entspricht, in deren Innenraum eingeführt, sodass ein umfänglich geschlossener Formrohr-Querschnitt entsteht.

### c) Ausführungsbeispiele

Ausführungsformen gemäß der Erfindung sind im Folgenden beispielhaft näher beschrieben. Es zeigen:
- **Figur 1a, b:**: eine Aufschneidemaschine zum Verpressen und Aufschneiden von Laiben in der Seitenansicht in unterschiedlichen Funktionsstellungen beim Verpressen,
- **Figur 2a** - **d:**: die Aufschneidemaschine der Figuren 1 in der Seitenansicht in unterschiedlichen Funktionsstellungen beim Aufschneiden,
- **Figur 3a:**: ein Formrohr in der Seitenansicht im Schnitt,
- **Figur 3b:**: das Formrohr geschnitten entlang der Linie B - B der Figur 1a,
- **Figur 3c**:: das Formrohr geschnitten entlang der Linie C - C der Figur 1a,
- **Fig. 4:**: einen Schnitt durch eine andere Bauform des Formrohres entlang der Linie D- D der Figur 1a.

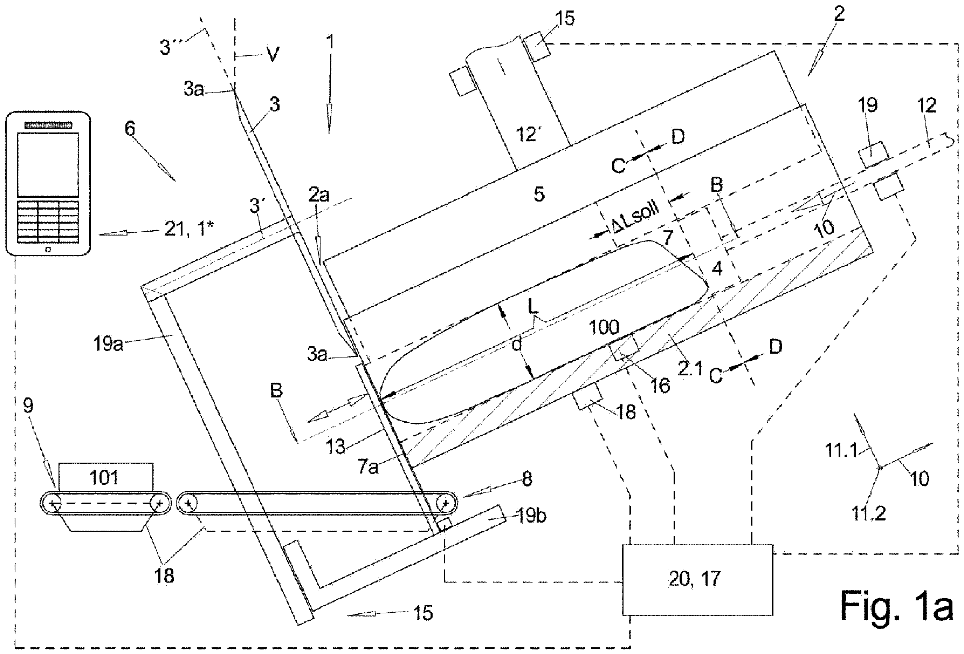

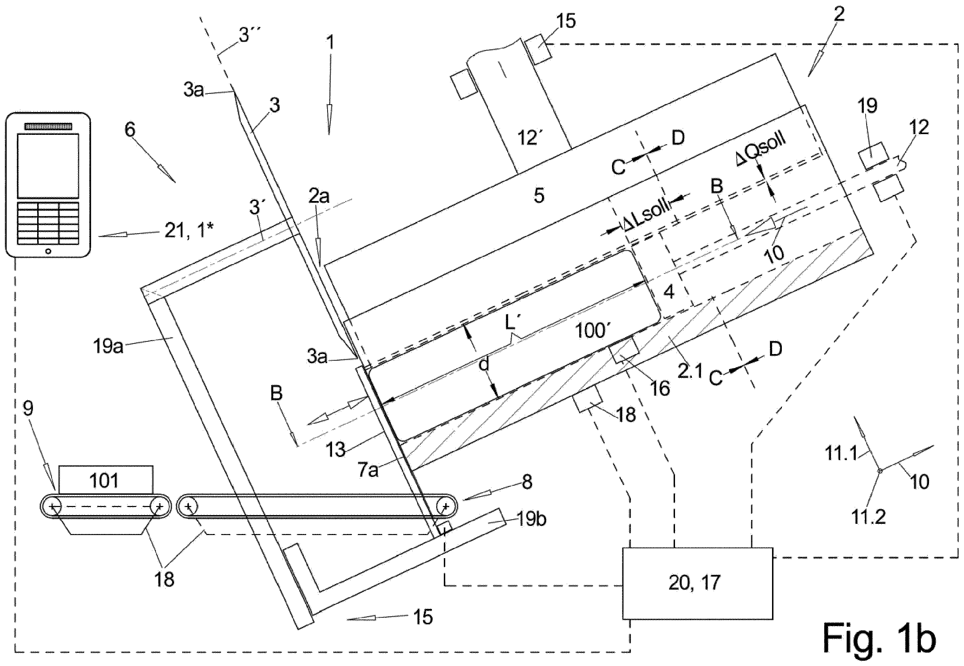

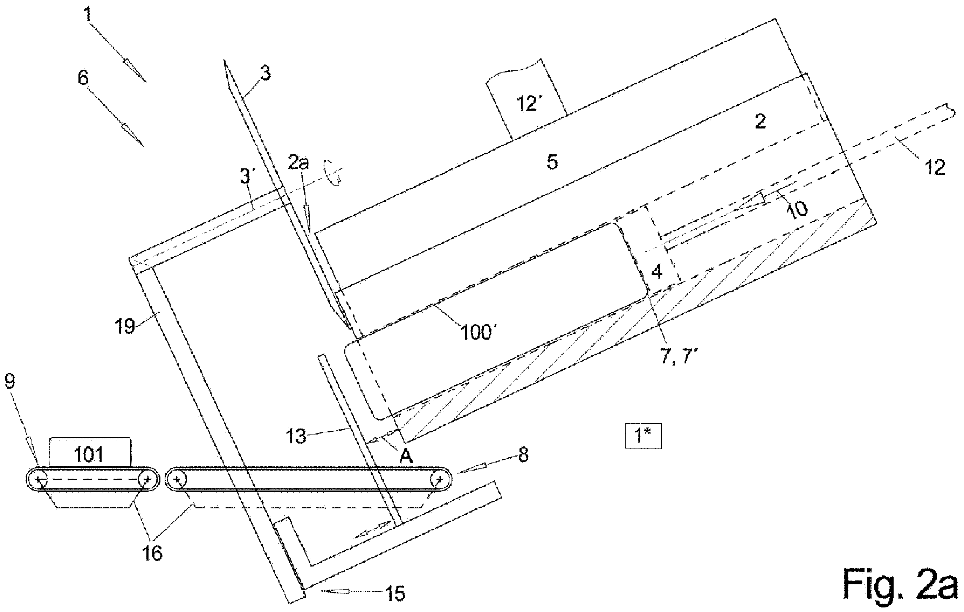

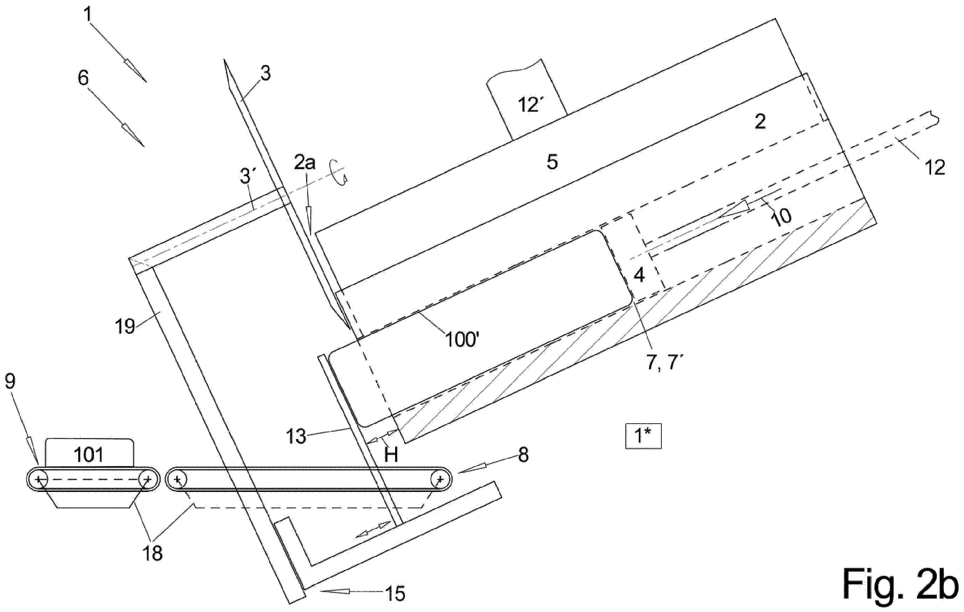

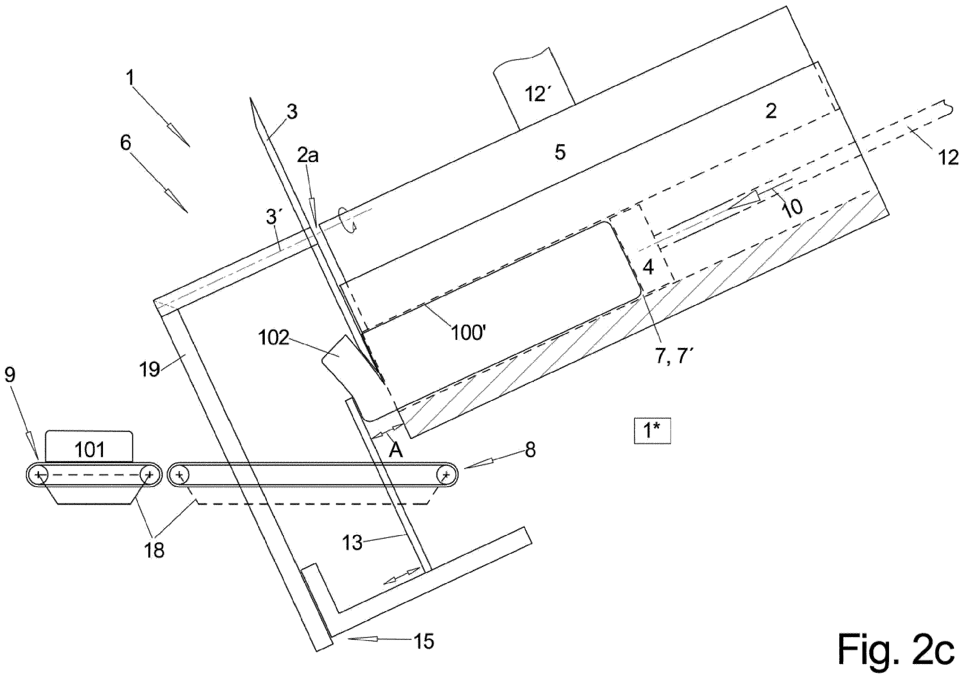

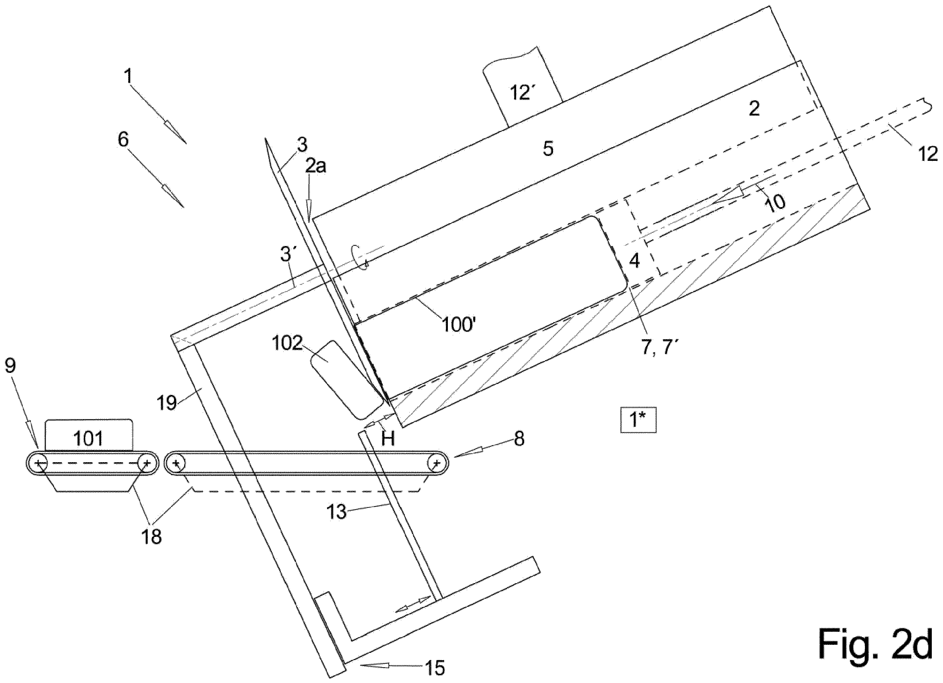

In den **Figuren 1** **und** **2** ist - geschnitten entlang der Längs-Pressrichtung 10 - die gesamte Schneidemaschine 1 dargestellt, die außer dem Formrohr 2 und den Pressstempeln 4, 5 eine Schneideinheit 6 umfasst zum Abtrennen von Scheiben 101 von dem verpressten Laib 100, dem Strang 100'.

Hinsichtlich des Formrohres 2 ist zu erkennen, dass das Formrohr 2 schräg nach vorne, also zur Schneideinheit 6 hin, nach unten abwärts gerichtet angeordnet ist.

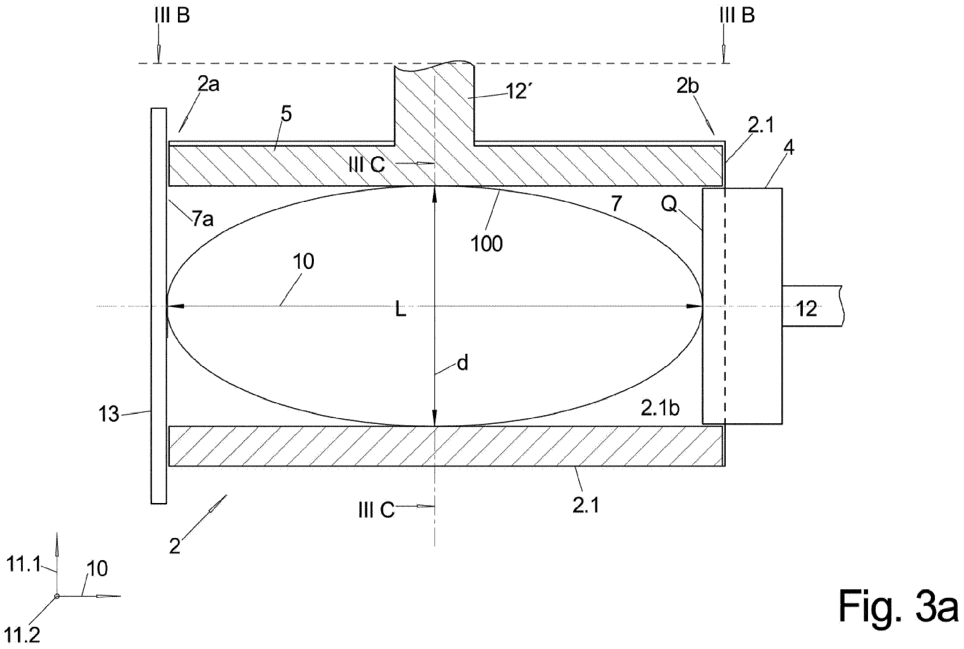

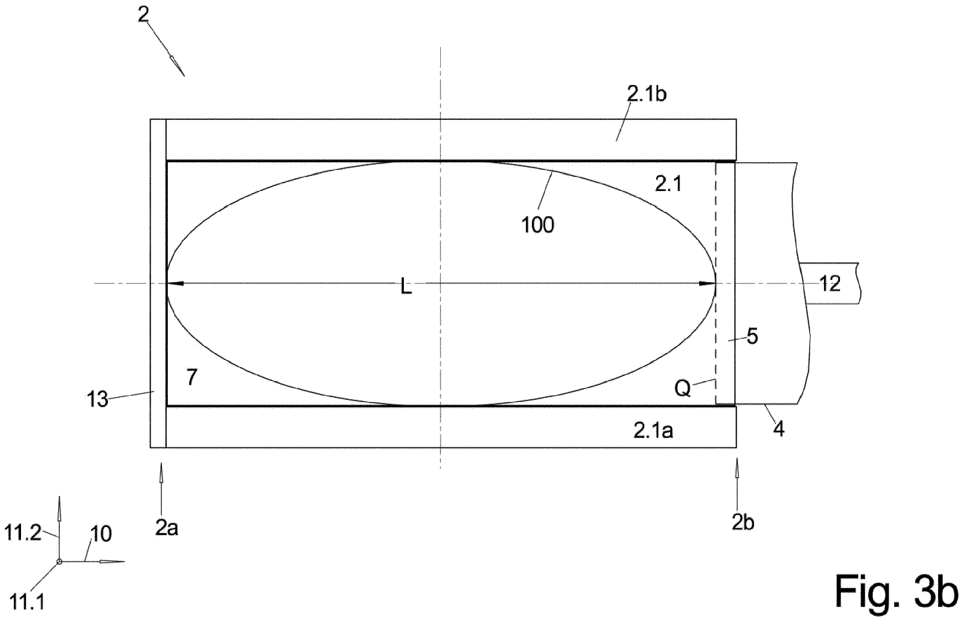

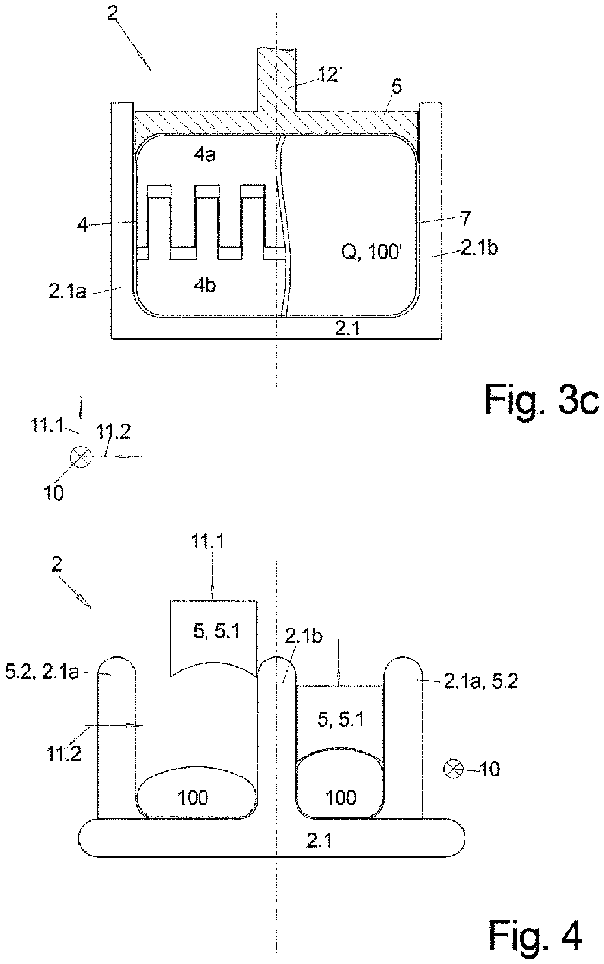

Das Formrohr 2 ist gebildet aus einer im Querschnitt U-förmigen Formrinne 2.1 mit parallel zueinander verlaufenden Wänden 2.1a, b des Rinnen-Hohlraumes und einen in diese offene Seite der Formrinne 2.1 genau hinein passenden Quer-Pressstempel 5, wie besser in **Figur 3a****,** **b** sowie insbesondere **Figur 3c** erkennbar.

Aus **Figur 3c** wird ferner klar, dass der Längs-Pressstempel 4, der passgenau in Längsrichtung 10 in dem Formrohr-Hohlraum 7 verfahrbar sein soll, in einer Dimension, nämlich der Eintauch-Richtung 11.1 des Quer-Pressstempels 5, in aller Regel eine variable Größe besitzen muss und deshalb meist aus zwei , beispielsweise zinkenartig ineinandergreifenden, Teilen 4a und 4b besteht.

**Figur 4** zeigt ferner, dass zum einen - in Blickrichtung der **Figuren 1** **und** **2** - auch zwei, vorzugsweise identische - Formrinne 2.1 hintereinander, also nebeneinanderliegend, vorhanden sein können.

**Figur 4** zeigt des Weiteren, dass die im Querschnitt U-förmige Formrinne 2.1 keine fixe Breite besitzen muss, sondern die Breite ihres Innenraumes einstellbar ist, indem eine der Seitenwände 2.1a der Formrinne 2.1 in ihrem Abstand zur gegenüberliegenden Wand 2.1b variabel ist, insbesondere auf eine oder mehrere bestimmte Positionen einstellbar ist, vorzugsweise auf den Abstand, der der Breite des Quer-Pressstempels 5 entspricht.

Sofern diese bewegliche Seitenwand 2.1a kraft-beaufschlagbar ist, wirkt sie als zweiter Quer-Pressstempel 5.2 zusätzlich zu dem vorhandenen Quer-Pressstempel 5, der dann der erste Quer-Pressstempel 5.1 ist.

Das Auseinanderfahren auf einen größeren Abstand erleichtert jedoch vor allem das Einlegen des Laibes 100 in die Formrinne 2.1.

Denn **Figur 3a** zeigt in diesem Zusammenhang, dass wegen des vorzugsweise kraftgesteuerten Quer-Pressstempels 5 der Längs-Pressstempel 4 ohnehin zumindest in der Quer-Pressrichtung 11.1 in seiner Erstreckung stufenlos veränderbar sein muss, wie in **Figur 3c** dargestellt.

In Längsrichtung 10 vor dem Schneidende 2a des Formrohres 2 befindet sich eine Anschlagplatte 13, die in ihrem axialen Abstand zum Schneidende 2a eingestellt werden kann - wie in den **Figuren 2** dargestellt - oder auch die vordere Formrohr-Öffnung überdeckend direkt an das Schneidende 2a des Formrohres 2 angelegt werden kann als Laib-Anschlag 13, wie in den **Figuren 1** dargestellt.

Die Schneideinheit 6 umfasst ein um eine oberhalb des Formrohr-Hohlraumes 7 parallel zur Längsrichtung 10 liegende Messerachse 3' rotierendes, kreisscheibenförmiges Messer 3 mit einer Schneidkante 3a an seinem Umfang, das mit seiner durch die umlaufende Schneidkante 3a definierten Messerebene 3" unmittelbar vor dem Schneidende 2a des Formrohres 2 in einer 1. Querrichtung 11.1 hin und her bewegt werden kann.

Dabei überstreicht die Schneidkante 3a die vordere, untere stirnseitige Öffnung des Formrohres 2 und trennt von einem daraus vorstehenden Laib 100 bzw. Strang 100' jeweils eine Scheibe 102 ab, wie in den **Figuren 2** dargestellt.

Die Aufschneidemaschine 1 umfasst ferner eine Basisdaten-Messvorrichtung 20, mit denen einige physikalische Basisdaten von der Maschine automatisch ermittelt werden können.

Eine Längen-Messvorrichtung 19 kann beispielsweise an der Kolbenstange 12 des Längs-Pressstempels 4 angeordnet sein und die jeweilige Längsposition des Längs-Pressstempel als 4 detektieren.

Analog kann an der Kolbenstange 12' des Quer-Pressstempels 5 eine Dicken-Messvorrichtung 15 vorhanden sein, die die Position des Quer-Pressstempels 5 in dessen Bewegungsrichtung, hier der 1. Querrichtung 11.1, detektiert, wobei diese Bewegungsrichtung 11.1 des Quer-Pressstempels 5 nicht unbedingt mit der Bewegungsrichtung der Messer-Achse 3' übereinstimmen muss.

Liegt der unverpresste, aber in der Regel meist im Außenbereich gefrorene, Laib 100 in der Formrohrrinne 2.1 und die Anschlagplatte 13 ist als Laib-Anschlag die vordere. stirnseitige Öffnung 7a des Formrohr-Hohlraumes 7 überdeckend an das Schneidende 2a des Formrohres 2 angelegt, so kann der Längs-Pressstempel 4 an das hintere Ende des Laibes 100 angelegt werden und aus dessen Längsposition die Länge L des Laibes 100 ermittelt werden, wie in **Figur 1a** sowie den **Figuren 3a**, **b** ersichtlich.

Ferner kann durch Anlegen des Quer-Pressstempels 5 an den Laib 100 auch die Querposition Quer-Pressstempels 5 und daraus die momentane größte Dicke d des Laibes 100 in dieser ersten Querrichtung 11.1 bestimmt werden, wie ebenfalls in **Figur 1a** sowie den **Figuren 3a****, b** ersichtlich.

Für die Vermessung im unverpressten Ausgangszustand sollte der entsprechende Stempel 4,5 möglichst kraftfrei, beispielsweise nur mit seinem Eigengewicht und ohne zusätzliche Kraftbeaufschlagung mittels des Stempel-Antriebes, an dem Laib 100 anliegen.

Zusätzlich kann über eine Gewichts-Messvorrichtung 18, die beispielsweise am Formrohr 2 angeordnet sein kann, das Gewicht des Laibes 100 ermittelt werden.

Die Steuerung 1* der Aufschneidemaschine 1, die mit der Basisdaten-Messvorrichtung 20 signaltechnisch verbunden ist, kann - in Kenntnis des meist vom Bediener eingegebenen spezifischen Gewichtes des Laibes 100 - hieraus die Größe der Hohlräume im Formrohr 2 um den Laib 100 herum zwischen Laib-Anschlag 13 und Längs-Presskolben 4 ermitteln und aufgrund dieser Basisdaten und/oder weiterer, über eine Eingabe-Einheit 21 vom Bediener eingegebene Basisdaten eine Soll-Längenveränderung ΔLsoll ermitteln, um die der Laib 100 beim Verpressen in einen Strang 100' verkürzt werden soll.

Die Steuerung 1* ermittelt ferner aus dieser Soll-Längenveränderung ΔLsoll die hierfür notwendige Querposition des Quer-Pressstempels 5, und steuert den - nicht dargestellten - Quer-Pressstempel-Antrieb entsprechend an, bevor oder gleichzeitig mit dem Vorwärtsschieben des Längspressstempels 4 mittels des ebenfalls nicht dargestellten Längs-Pressstempel-Antriebes, auch dieser gesteuert von der Steuerung 1*, um diese Soll-Längenveränderung ΔLsoll nach vorne, wie in **Figur 1b** dargestellt.

Wie dort ersichtlich, ist sowohl die Soll-Längenveränderung ΔLsoll als auch die Soll-Querschnittsveränderung ΔQsoll jeweils positiv, also die beiden Stempel 4, 5 wurden hierfür jeweils weiter vorwärts geschoben in Längsrichtung bzw. in der ersten Querrichtung 11.1.

Auf diese Art und Weise wird eine zu starke Verkürzung des Laibes 100 beim Verformen in den Strang 100' vermieden.

Die Basisdaten-Messvorrichtung 20 kann weitere Messvorrichtungen umfassen, beispielsweise eine Temperatur-Messvorrichtung 16 im Boden der Formrohrrinne 2.1, mittels der die Außentemperatur des in die Formrohrrinne 2.1 eingelegten Laibes 100 ermittelt werden kann, die ebenfalls ein für die mögliche Verformung des Laibes 100 wichtiger Parameter ist.

In die Basisdaten-Messvorrichtung 20 ist meist eine Volumen-Messvorrichtung 17 integriert, denn aus den Positionen von Längs-Pressstempel 4 und Quer-Pressstempel 5 im verpressten Zustand lässt sich das Volumen des inneren Freiraumes 7 im Formrohr 2 zwischen Laib-Anschlag 13 und Längs-Pressstempel 4 errechnen, welches ja wegen beabsichtigter vollständiger Füllung dieses Freiraumes 7 auch dem Volumen des Stranges 100' entsprechen sollte.

Aus den Positionen der Pressstempel 4, 5 im unverpressten Zustand gemäß **Figur 1a** bei der Ermittlung der Länge L und maximalen Dicke d des Laibes 100 ist dies nur mit zusätzlicher Kenntnis des Gewichts des jeweiligen Laibes 100 sowie dessen spezifischen Gewichts möglich, da die Form des Querschnittes des Laibes 100 nicht genau genug bekannt ist.

Dies wäre ohne Kenntnis der Gewichtsdaten nur möglich über eine vorgelagerte, nicht dargestellte, separate direkte Volumen-Messvorrichtung 17, etwa eine berührungslose optische Abtastung des Querschnittes des Laibes 100 über dessen gesamte Länge.

Auch dies würde dazu führen, dass der aufgrund der Soll-Längenveränderung ΔLsoll festgelegte Soll-Querschnitt Qsoll und damit die Querposition des Quer-Pressstempels 5 für die Verpressung sehr genau festgelegt werden könnte.

Da das Verpressen des verpressten Laibes 100 in der Regel unter einer definierten Kraft durchgeführt werden sollte, die vorzugsweise gleich der an den Stempeln anliegenden Kraft beim Aufschneiden des Laibes 100 sein soll, enthält die Aufschneidemaschine 1 vorzugsweise auch eine Kraft-Messvorrichtung 14, mit der zumindest die Längs-Presskraft ermittelt werden kann. Dazu kann ein entsprechender Kraft-Sensor 14 wie dargestellt am Laib-Anschlag 13 angeordnet sein, oder auch - nicht dargestellt - am Stempel-Antrieb, was die bevorzugte Lösung ist, und dann an beiden Stempel-Antrieben, um die an beiden Stempeln 4, 5 anliegenden Kräfte messen und steuern zu können

Lediglich der Vollständigkeit halber wird anhand der **Figuren 2** das anschließende automatische Aufschneiden des Strang 100' in Scheiben 101, 102 erläutert:
Hierzu wird der zur einem Strang 100' verpresste Laib 100 mittels des Längs-Pressstempels 4 mit einer Vorschubkraft, die vorzugsweise der Messkraft entspricht, weiter vorwärts geschoben, und zwar über das Schneid-Ende 2a des Formrohres 2 hinaus (**Figur 2a**), bis der Laib 100 mit seiner vorderen Stirnfläche an der auf einen entsprechenden Abstand A zum Schneidende 2a des Formrohres 2 eingestellten Anschlagplatte 13 anliegt **(****Figur 2b**), der die Dicke der abzutrennenden Scheibe vorgibt.

Wenn in Längsrichtung 10 die Stellung des Laibes 100 zum Abtrennen der nächsten Scheibe 101 auf diese Art und Weise erreicht ist, taucht das Messer 3 mit seiner Schneidkante 3a zunehmend in Eintauch-Richtung, die hier der Quer-Pressrichtung 11.1 entspricht, in den Querschnitt Q des Laibes 100 ein und trennt eine Scheibe 102 ab.

Beim Eintauchen des Messers 3 durch Verfahren in der Eintauch-Richtung, wird auch die Anschlagplatte 13 in der gleichen Querrichtung bewegt (**Figur 2c**), sodass die abgetrennte Scheibe 102 über die Oberkante, die Funktionskante, der im rechten Winkel zur Längsrichtung 10 und damit ebenfalls schräg stehenden Anschlagplatte 13 herabkippen **(****Figur 2d**) und auf den unmittelbar darunter befindlichen Abförderer 8 fallen kann, der diese abtransportiert und dann an einen weiteren Abförderer 9 übergibt.

Einer der beiden Abförderer, vorzugsweise der nachgelagerte Abförderer 9, auf dem sich noch die zuvor abgetrennte Scheibe 101 befindet, umfasst eine Waage 18 zum Wiegen der einzelnen erzeugten Scheiben 101, 102. Deren Gewicht kann an die Steuerung 1* der Maschine 1 rückgemeldet werden, zum automatischen Korrigieren des Abstandes A und damit des Gewichts der nachfolgenden Scheiben.

Für das gemeinsame Bewegen sind sowohl das Messer 3 als auch die Anschlagplatte 13 an einem gemeinsamen Träger 22 befestigt, der in der Eintauch-Richtung 11.1 des Messers 3 beweglich an einem - nicht dargestellten - Grundgestell der Schneideinheit 6 befestigt ist.

Entlang dem Träger 22 ist die Anschlagplatte 13 in Längsrichtung 10 verstellbar, um den Abstand A und damit die Dicke der abzutrennenden Scheibe zu verändern.

Der Träger 22 kann auch wie dargestellt zweiteilig ausgebildet sein und aus einem Messer-Träger 22a bestehen, von dem das rotierende Messer 3 getragen wird, und einem Anschlag-Träger 22b, gegenüber dem die Anschlagplatte 13 in Längsrichtung 10 verschiebbar und einstellbar befestigt ist.

Indem die beiden Träger 22a, b relativ zueinander verstellbar sind, insbesondere in der Eintauch-Richtung 11.1, kann der in der Längsrichtung 10 betrachtete Spalt zwischen der Schneidkante 3a des Messers 3 und der Funktionskante, der oberen Kante, der Anschlagplatte 13 eingestellt werden abhängig unter anderem von der Elastizität der abzutrennenden Scheiben.

### BEZUGSZEICHENLISTE

- **1**: Aufschneidemaschine
- **1***: Steuerung
- **2**: Formrohr
- **2.1**: Formrohr Rinne
- **2.1a, b**: Seitenwand
- **2a**: Schneid-Ende
- **2b**: Belade-Ende
- **3**: Messer
- **3'**: Messer-Achse
- **3"**: Messer-Ebene
- **3a**: **Schneidkante**
- **4**: Längs-Pressstempel
- **4a, b**: Längsstempel-Teil
- **5**: Quer-Pressstempel
- **6**: Schneideinheit
- **7**: innerer Freiraum, Formrohr-Hohlraum
- **7a**: vordere, stirnseitige Öffnung
- **8**: Abförderer
- **9**: Abförderer
- **10**: Längs-Pressrichtung, axiale Richtung, Vorschubrichtung
- **11.1**: erste Querrichtung, Quer-Pressrichtung
- **11.2**: zweite Querrichtung
- **12, 12'**: Kolbenstange
- **13**: Anschlagplatte, Laib-Anschlag
- **14**: Kraft-Messvorrichtung
- **15**: Dicken-Messvorrichtung
- **16**: Temperatur-Messvorrichtung
- **17**: Volumen-Messvorrichtung
- **18**: Gewichts-Messvorrichtung, Wiegestation
- **19**: Längen-Messvorrichtung
- **20**: Basisdaten-Messvorrichtung
- **21**: Eingabe-Einheit
- **22**: Träger
- **22a**: Messer-Träger
- **22b**: Anschlag-Träger

- **100**: Laib
- **100'**: Strang
- **101**: Scheibe
- **102**: Scheibe

- **A**: Abstand
- **d**: Dicke
- **L, L'**: Länge
- **ΔL**: Längen-Veränderung
- **ΔLsoll**: Soll-Längenveränderung
- **Q, Q'**: Querschnitt
- **ΔQ**: Querschnitts-Veränderung
- **ΔQsoll**: Soll-Querschnitts-Veränderung
- **V**: Vertikale

## Patentansprüche

1. **Verfahren** zum Verpressen eines unregelmäßig geformten, länglichen Laibes (**100**) aus einem elastischen Material, z.B. gewachsenem Fleisch, in einen Strang (**100'**) mit einem entlang seiner Längserstreckung (**10**) gleichbleibenden Querschnitt (**Q**) unter Längen-Veränderung (**ΔL**) und Querschnitts-Veränderung (**ΔQ**) des Laibes (**100**), indem
- zumindest physikalische Basis-Daten des Laibes (**100**) ermittelt werden, **dadurch gekennzeichnet, dass**
- eine Soll-Längenveränderung (**ΔLsoll**) des Laibes (**100**) zwischen dem unverpressten Zustand und dem verpressten Zustand vorgegeben wird oder automatisch ermittelt wird,
- insbesondere abhängig von den ermittelten physikalischen und/oder oder nicht-physikalischen Basis-Daten und/oder der Art und/oder dem Zustand des Laibes (**100**),
- eine Soll-Querschnitts-Beeinflussung, insbesondere eine Soll-Querschnitts-Veränderung (**ΔQsoll**), die notwendig ist zur Verformung in einen Strang (**100'),** automatisch ermittelt wird aus der vorgegebenen Soll-Längenveränderung **(ΔLsoll)** und aus den ermittelten physikalischen Basis-Daten des Laibes (**100**).
(Mit Formrohr:)

2. Verfahren nach Anspruch 1,
**dadurch gekennzeichnet, dass**
- der Laib (**100**) in einem Formrohr (**2**) mit über dessen Längserstreckung gleichem Querschnitt angeordnet wird,
- der Laib (**100**) im Formrohr (**2**) in wenigstens einer Querrichtung **(11.1, 11.2)** zur Längserstreckung mittels eines Quer-Pressstempels (5) sowie in der Längs-Pressrichtung (**10**) des Formrohres (**2**) mittels eines Längs-Pressstempels (4) verpresst wird,
- für den Quer-Pressstempel (5) im verpressten Zustand,
- als Soll-Querschnitts-Beeinflussung eine Quer-Presskraft und/oder
- als Soll-Querschnitts-Veränderung (**ΔQsoll**) eine Quer-Position automatisch ermittelt wird.
(Basis-Daten:)

3. Verfahren nach einem der vorhergehenden Ansprüche,
**dadurch gekennzeichnet, dass**
die physikalischen Basis-Daten des Laibes (**100**) mindestens
- die Länge (**L**) in Längspress-Richtung (**10**) und
- das Gewicht (**G**) oder Volumen (**V**)
- insbesondere auch den größten Querschnitt (**Qmax**) lotrecht zur Länge (**L**)
umfassen.

4. Verfahren nach einem der vorhergehenden Ansprüche,
**dadurch gekennzeichnet, dass**
die physikalischen Basis-Daten
- Daten des Materials, insbesondere hinsichtlich
- dessen physikalischer Eigenschaften wie etwa Elastizität und/oder Plastizität,
- insbesondere dessen Flüssigkeitsanteil,
und/oder
- den Frostungs-Zustand des Laibes (**100**), insbesondere
- die Oberflächentemperatur
und/oder
- die Frostungstiefe
umfassen.

5. Verfahren nach einem der vorhergehenden Ansprüche,
**dadurch gekennzeichnet, dass**
die nicht-physikalischen Basis-Daten
- die Art des Materials des Laibes (**100**),
- insbesondere bei einem gewachsenen Fleischstück die Tierart und insbesondere die Herkunfts-Stelle am Tier
umfassen.
(Konkrete Werte:)

6. Verfahren nach einem der vorhergehenden Ansprüche,
**dadurch gekennzeichnet, dass**
- die Soll-Längenveränderung **(ΔLsoll)** zwischen -30 % und +10 % beträgt.

7. Verfahren nach einem der vorhergehenden Ansprüche,
**dadurch gekennzeichnet, dass**
die Soll-Längenveränderung **(ΔLsoll)** des Laibes (**100**) ein positiver Wert ist.

8. Verfahren nach einem der vorhergehenden Ansprüche,
**dadurch gekennzeichnet, dass**
- entweder die Längen-Veränderung (**ΔL**) oder Querschnitts-Veränderung (**ΔQ**) des Laibes (**100**) ein positiver Wert ist und die jeweils andere Veränderung ein negativer Wert ist,
- oder die Längen-Veränderung (**ΔL**) und die Querschnitts-Veränderung (**ΔQ**) des Laibes (**100**) jeweils einen negativen Wert darstellen.
(Querverpressen in zwei Querrichtungen:)

9. Verfahren nach einem der vorhergehenden Ansprüche,
**dadurch gekennzeichnet, dass**
- der Laib (**100**) zusätzlich zu dem Querverpressen in der ersten Querrichtung (**11.1**) in einer zweiten Querrichtung (**11.2**), die insbesondere lotrecht zur ersten Querrichtung (**11.1**) steht, im Formrohr (**2**) querverpresst wird,
- insbesondere für den zweiten Quer-Pressstempel (**5.2**) eine Quer-Position für den verpressten Zustand automatisch ermittelt wird aus den vor dem Verpressen des Laibes (**100**) ermittelten Basis-Daten des Laibes (**100**).
(Anschließendes Aufschneiden)

10. **Verfahren** zum Aufschneiden des Laibes (**100**) in, insbesondere gewichtsgenaue, Scheiben (**101**, **102**), indem nach dem Verpressen des Laibes (**100**) zu einem Strang (**100'**) nach einem der vorhergehenden Ansprüche wobei
- der verpresste Zustand, in dem die Länge (**L'**) des Stranges (**100'**) in Längspress-Richtung (**10**) ermittelt wird, ein Mess-Zustand ist, in dem der Strang (**100'**) mit einer Mess-Kraft beaufschlagt ist, insbesondere mittels des Längs-Pressstempels (**4**),
- der Strang (**100**) in Längs-Pressrichtung (**10a**) vorwärts geschoben wird über das vordere Schneid-Ende (**2a**) des Formrohres (**2**) hinaus,
- vor dem vorderen Schneid-Ende (**2a**) des Formrohres (**2**) von jedem Strang (**100'**) eine Scheibe (**101**) mittels wenigstens eines Messers (**3**) abgetrennt wird,
**dadurch gekennzeichnet, dass**
- beim Aufschneiden des Laibes (**100**) dieser vom Längs-Pressstempel (**4**) schrittweise vorwärtsgeschoben wird mit einer Kraft, die unabhängig von der Mess-Kraft ist, und insbesondere die Maximalkraft des Längs-Pressstempels (**4**) ist.

11. **Aufschneide-Maschine** (1) zum Aufschneiden eines Laibes (**100**) in, insbesondere gewichtsgenaue, Scheiben (**101, 102**), nach dem Verpressen des Laibes (**100**) zu einem Strang (**100'**) nach einem der vorhergehenden Ansprüche 1 bis 10, wobei die Aufschneidemaschine (**1**) aufweist
- mindestens ein vorne und hinten offenes, in Längs-Pressrichtung (**10**), der Axialrichtung, verlaufendes Formrohr (**2**) für je einen Laib (**100**),
- für jedes der Formrohre (**2**) einen Längs-Pressstempel (**4**), der in das Formrohr (**2**) vom hinteren Belade-Ende (**2b**) aus in Längs-Pressrichtung (**10a**) des Formrohres (**2**) einschiebbar und mit einer Presskraft beaufschlagbar ist,
- wobei das Formrohr (**2**) in Umfangsrichtung aus mehreren relativ zueinander in mindestens einer Querrichtung (**11.1**, **11.2**) beweglichen Formrohr-Teilen besteht, wovon eines ein Quer-Pressstempel (**5**) ist und dadurch das Formrohr (**2**) in mindestens einer Querrichtung (**11.1**, **11.2**) zur Längs-Pressrichtung (**10**) einen verstellbaren Querschnitt (**Q**) besitzt,
- am vorderen Schneidende (**2a**) der Formrohre (**2**) ein Messer (**3**) zum Abtrennen von Scheiben (**101, 102**) von dem Fleischstrang (**100'**) angeordnet ist,
**dadurch gekennzeichnet, dass**
- eine Basisdaten-Messvorrichtung (**20**) vorhanden ist, die in der Lage ist, Basisdaten des unverpressten Laibes (**100**) automatisch zu ermitteln,
- umfassend mindestens eine Längen-Messvorrichtung (19), die in der Lage ist, die Länge des Laibes (**100**) sowohl im unverpressten Zustand als auch im verpressten Zustand zu messen,
- eine Quer-Positioniervorrichtung vorhanden ist, die in der Lage ist, eine vorgegebene Quer-Position mit dem Quer-Pressstempel (**5**) automatisch anzufahren,
- eine Steuerung (**1***) vorhanden ist, die in der Lage ist, aus ermittelten oder vorgegebenen Basis-Daten des Laibes (**100**) eine vorzugebende Quer-Position für den Quer-Pressstempel (**5**) automatisch zu ermitteln.

12. Aufschneide-Maschine nach Anspruch 11,
**dadurch gekennzeichnet, dass**
eine Eingabe-Einheit (**21**) vorhanden ist, um Basis-Daten des Laibes (**100**) in die Steuerung (**1***) einzugeben.

13. Aufschneide-Maschine nach einem der vorhergehenden Maschinen-Ansprüche,
**dadurch gekennzeichnet, dass**
die Basisdaten-Messvorrichtung umfasst
- eine Gewichts-Messvorrichtung (**18**) und/oder
- eine Volumen-Messvorrichtung (**17**), insbesondere eine berührungslose, insbesondere optische, Abtast-Vorrichtung (**17**)
und/oder
- eine Temperatur-Messvorrichtung (**16**).

14. Aufschneide-Maschine nach einem der vorhergehenden Maschinen-Ansprüche,
**dadurch gekennzeichnet, dass**
- eine dem Formrohr (**2**) vorgelagerte Laib-Zufuhrvorrichtung vorhanden ist, und/oder
- ein in axialer Richtung wirksamer, insbesondere aktivierbarer und deaktivierbarer, Laib-Anschlag (**13**) vorhanden ist, entweder an der Laib-Zufuhrvorrichtung oder an dem Formrohr (**2**).
